# EUROPEAN PATENT SPECIFICATION

(11) **EP 4 481 366 B1**
(45) Date of publication and mention of the grant of the patent: **02.12.2026**
(21) Application number: 23886169.4
(22) Date of filing: 30.10.2023
(51) Int. Cl.: G01N 19/04, H01M 50/46

(54) **ADHESIVENESS MEASUREMENT DEVICE FOR MEASURING INTERFACIAL ADHESIVENESS BETWEEN ELECTRODE AND SEPARATOR, AND ADHESIVENESS MEASUREMENT METHOD USING SAME**
HAFTMESSVORRICHTUNG ZUR MESSUNG DER GRENZFLÄCHENHAFTUNG ZWISCHEN ELEKTRODE UND SEPARATOR UND HAFTMESSVERFAHREN DAMIT
DISPOSITIF DE MESURE D'ADHÉSIVITÉ POUR MESURER L'ADHÉSIVITÉ INTERFACIALE ENTRE UNE ÉLECTRODE ET UN SÉPARATEUR, ET PROCÉDÉ DE MESURE D'ADHÉSIVITÉ FAISANT APPEL À CELUI-CI

(30) Priority: 02.11.2022 KR 20220144739
(43) Date of publication of application: 25.12.2024
(73) Proprietor: LG Energy Solution, Ltd., Seoul 07335 (KR)
(72) Inventor: LEE, Sang Kyun, Daejeon 34122 (KR); KIM, Ki Tae, Daejeon 34122 (KR); LEE, Young Hwan, Daejeon 34122 (KR); HAN, Man Woong, Daejeon 34122 (KR)
(74) Representative: Plasseraud IP
(86) International application number: PCT/KR2023/016983
(87) International publication number: WO 2024/096473

(56) References cited:
- WO-A1-2022/203265
- CN-A- 108 110 342
- CN-A- 110 132 842
- CN-A- 110 132 842
- CN-A- 110 286 036
- CN-A- 112 945 847
- CN-A- 113 484 128
- JP-A- 2009 229 280
- JP-A- 2013 058 348
- JP-A- 2013 062 139
- JP-A- 2013 089 340
- KR-A- 20120 069 830
- KR-A- 20120 069 830
- KR-A- 20210 048 224
- KR-A- 20220 132 175

## Description

### [Technical Field]

The present invention relates to an adhesion measuring device for measuring interfacial adhesion between an electrode and a separator, and a method for measuring adhesion using the device.

### [Background Technology of the Invention]

Recently, due to the depletion of fossil fuels, the price of energy sources is rising, environmental pollution is becoming a growing concern, and the need for eco-friendly alternative energy sources is becoming an indispensable factor for future life. Therefore, research on various power generation technologies such as nuclear power, solar power, wind power, and tidal power is ongoing, and power storage devices for more efficient use of the energy generated are also of great interest.

In particular, the demand for batteries as an energy source is increasing rapidly as technology develops and demand for mobile devices increases, and research is being conducted on batteries that can meet various needs.

In terms of battery shape, there is a high demand for prismatic and pouch-type secondary batteries, which can be applied to products such as mobile phones due to their thin thickness, and in terms of materials, there is a high demand for lithium secondary batteries such as lithium-ion batteries and lithium-ion polymer batteries, which have advantages such as high energy density, discharge voltage, and output stability.

Typically, these secondary batteries are configured with an electrode assembly comprising a positive electrode, a negative electrode, and a separator disposed therebetween embedded inside the battery case, with positive and negative tabs welded to the two electrode tabs and sealed to expose them to the outside of the battery case. These electrode tabs are electrically connected via contacts with an external device, and the secondary battery is powered to or from the external device via the electrode tabs.

Securing the safety of secondary batteries is an important issue in the manufacture and use of secondary batteries. In particular, the separators commonly used in secondary batteries are subject to hindrance in interfacial adhesion between the separators due to various reasons related to their material properties and manufacturing processes, causing the separators to fold, and causing stability problems such as internal short circuits in the folded areas WO2022/203265 shows an example of adhesion measuring device comprising a fixing jig to receive a specimen on an electrolyte bath and an adhesion strength meter.

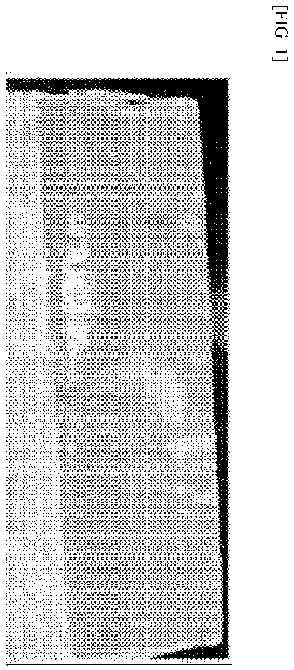

FIG. 1 is a photograph showing an electrode assembly with folds on the surface of the separator.

Referring to FIG. 1, it can be seen that during the manufacturing process of a secondary battery, after the electrode assembly stacked inside the battery case is filled with electrolyte, the flow in the process causes the separator and electrode interface to peel off, causing the separator to fold. These folds can lead directly to stability issues, as they can cause internal short circuits, resulting in low voltages that not only reduce voltage efficiency but also cause degradation. On the other hand, processes such as lamination or heat pressing can be performed to increase the adhesion between the electrode and the separator, but in this case, excessive drying can cause lithium plating on the negative electrode, which reduces the performance of the battery. Therefore, it is necessary to evaluate the interfacial adhesion between the electrode and separator as part of the physical property evaluation during the secondary battery manufacturing process.

Conventionally, in order to evaluate the interfacial adhesion between the electrode and the separator, the electrode and the separator with the electrode composite layer formed were cut to a certain size, the electrode and the separator were overlapped with each other, a PET film was sandwiched between them, and the measurement specimen was manufactured by heating and pressing with a flat plate press, and the adhesion was evaluated by separating the electrode and the separator with a Universal Testing Machine (UTM) equipment. However, in this case, it was difficult to determine the level of adhesion between the electrode and the separator that was wetted with electrolyte inside the actual secondary battery because it was measured in a dry state, and the measurement results showed higher adhesion than the results measured in a wet state.

Also, when evaluating the adhesion between the electrode and separator in a wet state by disassembling an actual secondary battery and measuring the adhesion between the obtained electrode and separator, there was a problem that the electrolyte impregnated in the electrode and separator volatilized during the measurement time after disassembly, resulting in results that differed from the actual level.

Therefore, in order to more accurately evaluate the interfacial adhesion between the electrode and separator during the secondary battery process, it is necessary to develop a technology that can measure the adhesion of the electrode by simulating the state of the electrode inside the actual secondary battery.

### [Description of the Invention]

### [Technical Problem]

The present invention aims to solve the above problems, and provides a device for evaluating the adhesion of an electrode and a separator in an environment equivalent to the condition in an actual secondary battery where the electrode and the separator are impregnated in an electrolyte, and a method for measuring the adhesion using the device.

### [Technical Solution]

The object of the invention is achieved by the subject-matter of the independent claims. Advantageous embodiments are defined in the dependent claims. Further examples are provided for facilitating the understanding of the invention.

### [Advantageous Effects]

According to the adhesion measuring device of the present invention and the adhesion measuring method using the adhesion measuring device, it is advantageous to easily measure the interfacial adhesion between an electrode and a separator in an environment equivalent to that in an actual secondary battery by simulating the condition inside a secondary battery containing an actual electrolyte, thereby predicting the interfacial adhesion between an electrode and a separator inside an actual secondary battery.

### [Brief Description of the Drawings]

FIG. 1 is a photograph showing the folds of a separator obtained by disassembling a conventional secondary battery.
FIG. 2 is a perspective view illustrating an adhesion measuring device according to an exemplary embodiment of the present invention.
FIG. 3 is a plan view illustrating a fixing jig according to an exemplary embodiment of the present invention.
FIG. 4 is an incised view showing a cross-section of the fixing jig with the fixing jig of FIG. 3 incised in the A-A' direction.
FIG. 5 is a perspective view illustrating the coupling of a fixing jig and a cover according to an exemplary embodiment of the present invention.
FIG. 6 is a perspective view illustrating the coupling of a fixing jig and a cover according to another exemplary embodiment of the present invention.
FIG. 7 is a graph showing the results of measuring the adhesion between the negative electrode or positive electrode and the separator, depending on whether it is impregnated with electrolyte or not.
FIG. 8 is a graph showing the results of measuring the adhesion between the negative electrode and separator at different stages of the process.
FIG. 9 is a flowchart illustrating the flow of a method for measuring interfacial adhesion between an electrode and a separator in a wet state.

### [Best Mode for Carrying out the Invention]

The term "comprise" or "have" is used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance. In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

The present invention provides an adhesion measuring device for measuring interfacial adhesion between an electrode and a separator, and a method for measuring adhesion using the device.

In general, the measuring method between the electrode and the separator is to cut the electrode and the separator with the electrode composite layer formed to a certain size, then overlap the electrode and the separator, sandwich the PET film between them, heat and pressurize with a flat plate press to manufacture a measurement specimen, and then separate the electrode and the separator with a Universal Testing Machine (UTM) equipment to measure the adhesion.

However, in this case, it was difficult to determine the level of adhesion between the electrode and the separator that was actually wetted with electrolyte inside the actual secondary battery because it was measured in a dry state, and the measurement results showed higher adhesion than the results measured in the actual electrolyte-wetted state.

Also, when measuring the adhesion between the electrode and separator in a wet state by disassembling an actual secondary battery and measuring the adhesion between the obtained electrode and separator, there was a problem that the electrolyte impregnated in the electrode and separator volatilized during the measurement time after disassembly, resulting in results that differed from the actual level.

Therefore, in order to more accurately evaluate the interfacial adhesion between the electrode and separator during the secondary battery process, it is necessary to develop a technology that can measure the adhesion of the electrode by simulating the state of the electrode inside the actual secondary battery.

Accordingly, to solve the above problems, the present invention provides a device for evaluating the adhesion of an electrode and a separator in an environment equivalent to the condition in an actual secondary battery in which the electrode and the separator are impregnated in an electrolyte, and a method for measuring the adhesion using the device.

Hereinafter, an adhesion measuring device for measuring an interfacial adhesion between an electrode and a separator according to the present invention, and a method for measuring the adhesion using the adhesion measuring device are provided.

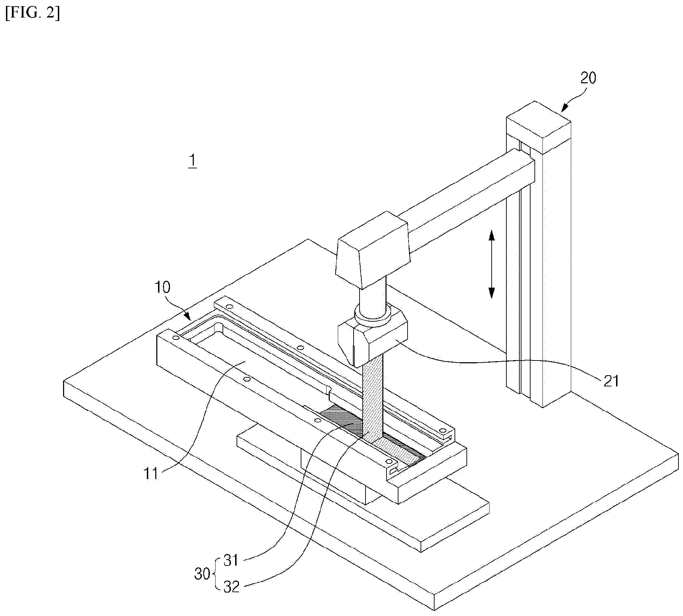

FIG. 2 is a perspective view showing an adhesion measuring device according to an exemplary embodiment of the present invention. Referring to FIG. 2, the adhesion measuring device 1 according to the present invention includes: a fixing jig 10 having a space for seating a measurement specimen 30 including an electrode 31 and a separator 32, the space receiving an electrolyte to fix the measurement specimen 30 immersed in the electrolyte; and an adhesion strength meter 20 provided with a grip 21 for gripping an end region of a separator 32 of a measurement specimen 30, and for measuring the force with which the separator 32 separates from the electrode 31 by pulling the gripped separator 32 in a direction perpendicular to the surface of the electrode 31, and has a structure in which a portion of the upper surface of the fixing jig 10 is recessed in a downward direction to form a receiving portion 11 for receiving electrolyte, and measures the interfacial adhesion between an electrode 31 and a separator 32 in a wet state by immersing the measurement specimen 30 in an electrolyte filled in a receiving portion 11.

In the present invention, the term "measurement specimen 30" refers to an object to be measured using the adhesion measurement device 1 according to the invention, which may be specifically an electrode assembly. The electrode assembly may comprise an electrode 31 having an electrode composite layer formed thereon and a separator 32, wherein the electrode 31 may be a positive electrode or a negative electrode having an electrode composite layer formed on one or both sides of the electrode current collector.

The fixing jig 10 may be formed with a receiving portion 11 having a space in which the measurement specimen 30 may be seated. The receiving portion 11 may be a space formed by a portion of the upper surface of the fixing jig 10 being recessed in a downward direction. The space formed by such recess means a space in which the measurement specimen 30 can be seated and a space in which the electrolyte can be received, and the receiving portion 11 can be formed at a predetermined depth so that the electrolyte can be received therein and the measurement specimen 30 can be sufficiently impregnated with the electrolyte. The fixing jig 10 can be formed from various forms of metal, for example, carbon steel, stainless steel, aluminum or alloys thereof, and is not limited to any particular metal.

Meanwhile, the adhesion strength meter 20 may include a grip 21 for gripping an end of the separator 32 of the measurement specimen 30, and may pull the gripped separator 32 in a unidirectional direction to measure the force required to separate the separator 32 from the electrode 31. The adhesion strength meter 20 may be a typical universal testing machine (UTM), such as a peel-off testing machine, in one example. In a specific example, in order to measure the interfacial adhesion between the electrode 31 and the separator 32 of the measurement specimen 30, the electrode 31 and the separator 32 of a portion of the measurement specimen 30 are artificially separated, and then an end portion of the separator 32 separated from the electrode 31 is fixed with the grip 21 of the adhesion strength meter 20 to pull the separator 32 at a 90° angle to the surface of the electrode 31 to measure the force by which the separator 32 is peeled off from the electrode 31 (90° peel-off test).

Further, the grip 21 of the adhesion strength meter 20 may include a metal jaw face having a grid formed on its surface. During operation of the adhesion strength meter 20, the separator 32 may slip while the separator 32 is pressed by the grip 21. Therefore, by forming a grid on the jaw face of the grip 21, the fixing force of the grip 21 on the separator 32 can be increased. The metal jaw face can be formed from various forms of metal, for example, carbon steel, stainless steel, aluminum, or alloys thereof. Furthermore, the metal jaw face may have a grid-like pattern having an engraved or embossed surface, and the grid-like pattern may have various lengths, including, but not limited to, a length in the width direction and a depth of recess of the engraved pattern or a protruding height of the embossed pattern.

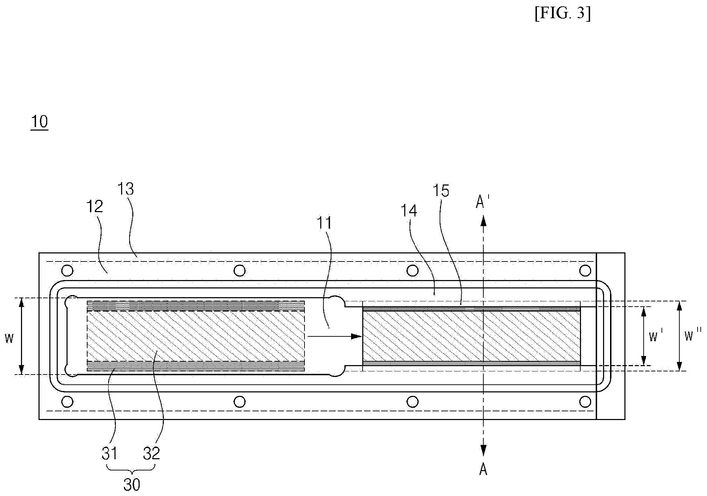

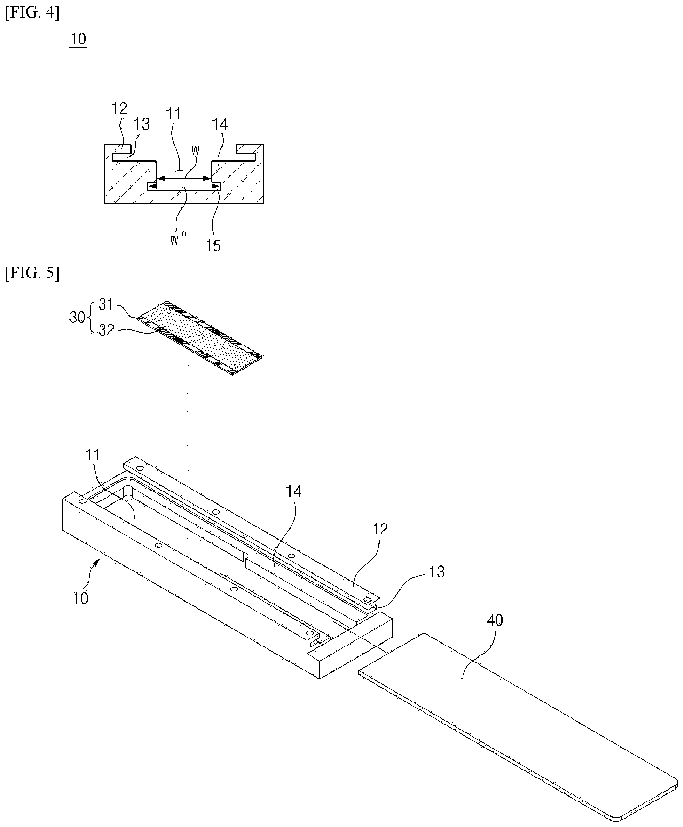

FIG. 3 is a plan view showing a fixing jig according to an exemplary embodiment of the present invention, and FIG. 4 is an incised view showing a cross-section of the fixing jig with the fixing jig of FIG. 3 incised in the A-A' direction. Referring to FIGS. 3 and 4, the fixing jig 10 may include a structure comprising a cover 40 that seals an open portion of the receiving portion 11 to prevent volatilization of the electrolyte contained in the receiving portion 11. In a specific example, the measurement specimen 30 obtained by disassembling the secondary battery may differ from the situation inside the secondary battery because a time interval is formed between when the secondary battery is disassembled and when it is seated in the receiving portion 11 of the fixing jig 10 containing the electrolyte, and during the time interval, the electrolyte may volatilize in the air. In this case, in order to realize a situation equivalent to the situation inside the secondary battery, a sufficient waiting time may be required to immerse the electrode specimen in the electrolyte for a certain period of time so that the electrolyte can sufficiently impregnate the electrode specimen. However, during the waiting time, the electrolyte contained in the receiving portion 11 of the fixing jig 10 may volatilize into the air, which may result in the electrode specimen not being sufficiently wetted, and this may be prevented by sealing the open portion of the receiving portion 11 of the fixing jig 10 with the cover 40 to prevent volatilization of the electrolyte.

FIG. 5 is a perspective view showing a combination of a fixing jig and a cover according to an exemplary embodiment of the present invention. Referring to FIG. 5, the fixing jig 10 includes a first fixing sill 12 formed on the upper surface by protruding upwardly and bending inwardly, and a first guide groove 13 formed between a bottom surface of the first fixing sill 12 and an upper surface of the fixing jig 10, and a cover may be inserted into the open end of the first guide groove 13 in a sliding method so that the open space of the receiving portion 11 is sealed or opened/closed.

For example, the first fixing sill 12 may have an "¬" shape by protruding in an upward direction on the upper surface of the fixing jig 10 and bending in an inward direction on a region of the upper surface of the fixing jig 10 where the receiving portion 11 is not formed. The bottom surface of the first fixing sill 12 has a certain step from the upper surface of the fixing jig 10, and a first guide groove 13 may be formed between the bottom surface of the first fixing sill 12 and the upper surface of the fixing jig 10. The depth of the first guide groove 13 corresponds to the length of the bent end of the first fixing sill 12, and is not limited to a certain depth.

Meanwhile, the first fixing sill 12 and the first guide groove 13 have a pair disposed parallel to each other face-to-face in the width direction of the fixing jig 10, and have a structure in which a cover is slidably removable on the open end of the first guide groove 13, so that the open space of the receiving portion 11 can be sealed or opened/closed.

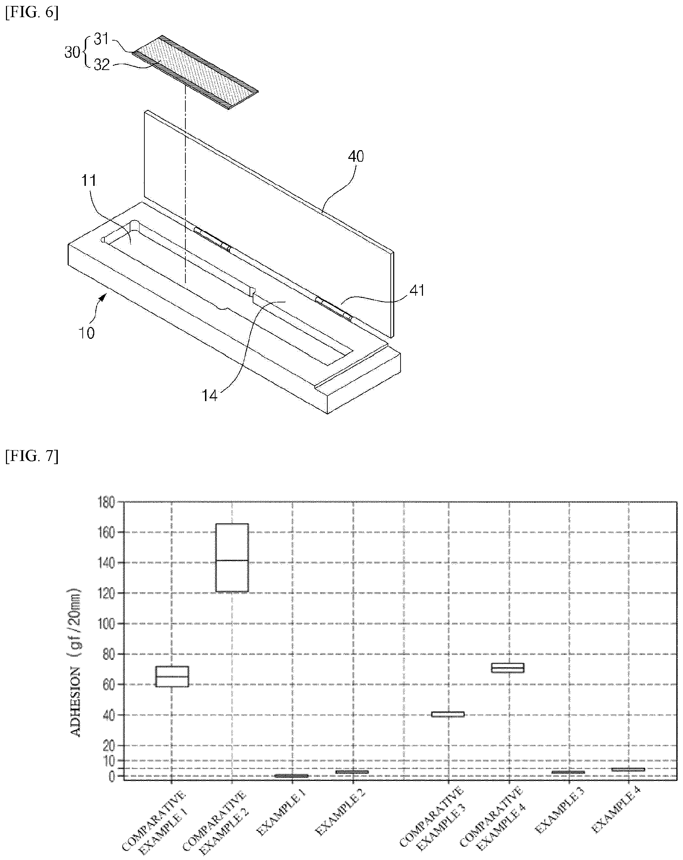

FIG. 6 is a perspective view showing the coupling of a fixing jig and a cover according to another embodiment of the present invention. Referring to FIG. 6, the fixing jig 10 may be connected to the cover by a hinge 41 such that the open space of the receiving portion 11 is sealed or opened/closed in such a way that the cover pivots. The hinge 41 is not limited to a hinge 41 having a particular structure, but may be a hinge 41 including a first casting mold and a second casting mold capable of relative rotation about an imaginary axis of rotation. For example, the first casting mold may be coupled to a side of the fixing jig 10, and the second casting mold may be coupled to the cover so that the first and second casting molds can be rotated relative to each other so that the open space of the receiving portion 11 of the fixing jig 10 can be sealed or opened/closed. Furthermore, the number of hinges 41 connecting the fixing jig 10 and the cover is not limited to a specific number, but it is preferably connected by two or more hinges 41 in consideration of the coupling force between the fixing jig 10 and the cover.

The receiving portion 11 includes second fixing sills 14 protruding inwardly on its sides, and second guide grooves 15 formed between a bottom surface of the second fixing sills 14 and a bottom surface of the receiving portion 11, wherein the second fixing sill 14 and the second guide groove 15 include a pair of second fixing sills 14 and a pair of second guide grooves 15 respectively disposed face to face in the width direction of the receiving portion 11, and wherein the measurement specimen 30 is inserted into the open end of the pair of second guide grooves 15 in a sliding method. The process of measuring the interfacial adhesion between the electrode 31 of the electrode specimen and the separator 32 is performed by gripping the end of the separator 32 with the grip 21 of the adhesion strength meter 20, and pulling the separator 32 at an angle of 90° to the surface of the electrode 31 so that the separator 32 is peeled off from the electrode 31. At this time, if the electrode specimen is not fixed, the electrode 31 may move along with the separator 32 when the separator 32 is removed from the electrode 31, making accurate measurement difficult. Therefore, by providing a separate second fixing sill 14 and a second guide groove 15 in the receiving portion 11, and by inserting the measurement specimen 30 into the second guide groove 15 so that it is bound, the electrode 31 can be fixed so that the electrode 31 does not move along the separator 32 in the process of separating the separator 32 from the electrode 31 by the adhesion strength meter 20. In this case, it is necessary to make the measurement specimen 30 having a different length in the width direction of the electrode 31 and the separator 32 such that only the electrode 31 of the measurement specimen 30 spans the second fixing sill 14 and the separator 32 of the measurement specimen 30 does not span the second fixing sill 14.

Referring to FIGS. 3 and 4, the receiving portion 11 may be formed such that the ratio of the length w' between the pair of second fixing sills to the length w in the width direction of the region where the second fixing sill 14 is not formed is in the range of 0.7 to 0.85.

If the ratio of the length in the width direction w' of the receiving portion 11 where the second fixing sill 14 is formed to the length w in the width direction of the receiving portion 11 where the second fixing sill 14 is not formed is greater than 0.85, the electrode 31 of the measurement specimen 30 may not be sufficiently spanned by the second fixing sill 14, and if it is less than 0.7, it may be less than the length in the width direction of the separator 32 of the measurement specimen 30, so an additional process of cutting the separator 32 may be required.

Meanwhile, in another specific example of the present invention, the receiving portion 11 may be of a structure such that the length w in the width direction of the area where the second guide groove 15 is not formed is larger than the length w" in the width direction between the pair of second guide grooves 15. It is a structure in which the measurement specimen 30 is inserted into the second guide groove 15 by sliding the measurement specimen 30 into the space in which the pair of second guide grooves 15 is formed after the measurement specimen 30 is seated in the space in which the second guide groove 15 is not formed in the receiving portion 11. In order to fix the measurement specimen 30 inserted into the second guide groove 15 so that it does not swing from side to side, the length w'' in the width direction between the pair of second guide grooves 15 may be formed similar to the length in the width direction of the measurement specimen 30. On the other hand, the space in which the second guide groove 15 of the receiving portion 11 is not formed is a space in which the measurement specimen 30 is seated before being inserted between the pair of second guide grooves 15, so that the operator can easily seat the measurement specimen 30 in the space in which the second guide groove 15 is not formed while gripping the measurement specimen 30. The length w in the width direction of the area in which the second guide groove15 is not formed may be formed larger than the length in the width direction of the measurement specimen 30. Therefore, the length w" in the width direction between the pair of second guide grooves 15 is set to a length similar to the length in the width direction of the measurement specimen 30 so that the measurement specimen 30 inserted between the pair of second guide grooves 15 is fixed, while the length w in the width direction in which the second guide grooves 15 of the receiving portion 11 are not formed is formed to be longer than the length in the width direction between the pair of second guide grooves 15 so that the operator can easily seat the measurement specimen 30 in the receiving portion 11 with the measurement specimen 30 gripped.

The adhesion measuring device 1 may further include a detecting portion (not shown) for detecting and displaying the force with which the electrodes 31 of the measurement specimen 30 and the separator 32 are separated. The detecting portion may numerically indicate an interfacial adhesion force between the electrodes 31 and the separator 32 of the measurement specimen 30. This may be a structure provided in the adhesion strength meter 20.

Moreover, the adhesion measuring device 1 may further include a storing portion (not shown). The storing portion may receive and store measurement data of the interfacial adhesion between the electrode 31 and the separator 32 of the measurement specimen 30. Optionally, it may further include a function to database the measured results separated into various types, such as types, thicknesses, and proportions of the metal current collector, the electrode composite layer, and the separator 32. Accordingly, based on the databased data, it is possible to predict the likelihood of folding of the separator 32 due to deterioration of adhesion between the electrode 31 and the separator 32 inside the actual secondary battery, the likelihood of internal short circuit, and the like.

In addition, the present invention provides a method for measuring interfacial adhesion between an electrode and a separator in a wet state using the previously described adhesion measuring device.

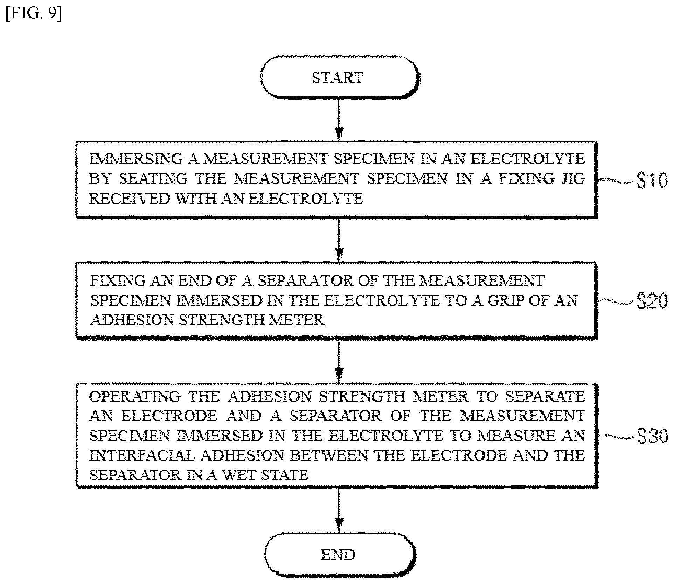

FIG. 9 is a flowchart illustrating the flow of a method for measuring interfacial adhesion between an electrode and a separator in a wet state, in one example of the present invention. Referring to FIG. 9, an adhesion measuring method for measuring an interfacial adhesion between an electrode and a separator in a wet state according to the present invention includes: immersing a measurement specimen in an electrolyte by seating the measurement specimen in a fixing jig received with an electrolyte S10; fixing an end of a separator of the measurement specimen immersed in the electrolyte to a grip of an adhesion strength meter S20; and operating the adhesion strength meter to separate an electrode and a separator of the measurement specimen immersed in the electrolyte to measure an interfacial adhesion between the electrode and the separator in a wet state S30.

First, the step of immersing the measurement specimen in the electrolyte S10 means seating the measurement specimen including the electrode and the separator in a receiving portion containing the electrolyte so that the electrolyte can impregnate the measurement specimen. The step may include a case in which the measurement specimen is seated in the receiving portion while the electrolyte is in the receiving portion, as well as a case in which it is received with the electrolyte after the measurement specimen is seated in the receiving portion. That is, the electrolyte can be received before the measurement specimen is seated in the receiving portion as well as after the measurement specimen is seated in the receiving portion. Preferably, the electrolyte is added in a sufficient amount to immerse the measurement specimen, which is seated in the receiving portion, in the electrolyte.

Furthermore, the measurement specimen to be immersed in the receiving portion can be immersed by itself or, if necessary, may be attached with a double-sided adhesive tape to the electrode surface of the measurement specimen, and with the measurement specimen with the double-sided adhesive tape attached to the glass substrate surface, the measurement specimen attached to the glass substrate can be immersed in the electrolyte. The process of adhering the electrode specimen to the glass substrate may include attaching the measurement specimen to the glass substrate and pressing it down with a roller 5 to 10 times.

Meanwhile, the measurement specimen needs to be fixed so that the measurement specimen under test does not move from side to side or up and down during the subsequent measurement of the adhesion strength using the adhesion strength tester. This may be accomplished by fixing the measurement specimen by inserting it into a pair of second guide grooves located inside the receiving portion as described above. Specifically, when the receiving portion is longitudinally divided into a region in which the pair of second guide grooves is formed and a region in which the pair of second guide grooves is not formed, the operator may position the measurement specimen in the region in which the pair of second guide grooves of the receiving portion is not formed, and then slide the measurement specimen between the pair of second guide grooves such that the measurement specimen is inserted into the pair of second guide grooves.

Further, the step S10 of immersing the measurement specimen in the electrolyte may include waiting for a certain amount of time so that the measurement specimen immersed in the electrolyte is impregnated with a sufficient amount of electrolyte. The waiting period may include covering the fixing jig with a cover to prevent volatilization of the electrolyte during the waiting period. While the measurement specimen is disassembled from the secondary battery and transferred to the receiving portion containing the electrolyte, the electrolyte impregnated in the measurement specimen may volatilize due to exposure to air, and a waiting period may be required to immerse the measurement specimen in the electrolyte for a sufficient time to replenish the volatilized electrolyte. Here, the process may further include covering the open portion of the receiving portion with a cover to prevent the electrolyte contained in the receiving portion from volatilizing in the air during the waiting period, thereby preventing further supply of electrolyte to the receiving portion. Furthermore, covering the open portion of the receiving portion with a cover may prevent the electrolyte contained in the receiving portion from overflowing by being blocked by the cover even if the fixing jig is subjected to an external impact.

Meanwhile, in the step S10 of immersing a measurement specimen in the electrolyte, the measurement specimen may include a positive electrode or negative electrode and a separator obtained by disassembling the secondary battery. Since the present invention aims to measure the interfacial adhesion between the electrode and the separator wetted in the electrolyte in order to solve the problem of the separator folding due to the decrease of the adhesion between the electrode and the separator inside the actual secondary battery after the electrode assembly embedded in the battery case is injected with the electrolyte, the measurement specimen is characterized in that it is obtained by disassembling the electrode assembly embedded in the battery case.

Meanwhile, the electrolyte in the receiving portion can be an electrolyte with the same composition as the electrolyte stored inside the disassembled secondary battery. By setting the composition of the electrolyte in the receiving solution and the electrolyte inside the secondary battery to be the same, it is possible to improve the reliability of the measurement results by simulating the same situation as the actual situation inside the secondary battery.

Further, the secondary battery includes a secondary battery that has undergone an activation process, and the secondary battery that has undergone the activation process can be disassembled to obtain a measurement specimen. When a secondary battery goes through an activation process in the manufacturing process of a secondary battery, a volume flow of the secondary battery is generated by charging and discharging, which may cause a change in the interfacial adhesion between the electrode and the separator, resulting in a folding of the separator. Therefore, it is possible to measure the adhesion between the electrodes and the separator of the measurement specimen obtained by disassembling variously classified secondary batteries based on whether they are activated and the degree of which they are activated, and to predict the state of interfacial adhesion between the electrodes and the separator inside the secondary battery before and after activation, or depending on the degree of activation, based on the results.

Meanwhile, the term "activation" as used herein can be understood to include any reaction that accompanies an initial charge to a secondary battery, such as the process of applying a certain amount of electricity to a secondary battery cell that does not have electrical properties so that the positive electrode and negative electrode have electrical properties, and non-limiting examples of reactions that accompany the initial charge may include the formation of an SEI film, partial charging of the battery capacity, and activation of the negative electrode, such as lithiation of a carbon-based negative electrode active material.

Next, the present invention includes the step S20 of fixing the end of the separator of the measurement specimen immersed in the electrolyte to the grip of the adhesion strength tester. Fixing the end of the separator of the measurement specimen immersed in the electrolyte solution to the grip of the adhesion strength tester may be preceded by separating the electrode and the separator of one end of the measurement specimen. The grip of the adhesion strength tester, which may be a typical universal testing machine (UTM), such as a peel-off testing machine, may include a metal jaw face having a grid formed on its surface to prevent slipping of the separator fixed by the grip.

Next, the present invention may include a step S30 of operating an adhesion strength tester to separate an electrode and a separator of a measurement specimen immersed in an electrolyte solution to measure an interfacial adhesion between the electrode and the separator in a wet state.

As a specific example, in order to measure the interfacial adhesion between the electrode and the separator of the measurement specimen, the load of the adhesion strength meter is set to a zero base, and the loading speed is set to a range from 5 to 200 mm/min, artificially separating the electrode and the separator in some areas of the measurement specimen, so that the end of the separator separated from the electrode is fixed by the grip of the adhesion strength meter, and then operating the adhesion strength meter to pull the separator at a 90° angle to the surface of the electrode to measure the force of peeling the separator from the electrode (90° peel-off test).

Furthermore, the process may include a process of databasing the results of measuring the interfacial adhesion between the electrode and the separator for various types, thicknesses, and proportions of the metal current collector, the electrode composite layer, and the separator. Based on the data recorded in the database, it is possible to predict the possibility of folding of the separator due to deterioration of the adhesion between the electrode and the separator inside the actual secondary battery, or the occurrence of an internal short circuit.

Meanwhile, the electrode of the present invention refers to a positive electrode or a negative electrode, wherein the positive electrode is a structure in which a positive electrode active material layer is laminated on one or both sides of the positive electrode current collector. In one example, the positive electrode active material layer includes a positive electrode active material, a conductive material, and a binder polymer, and may further include positive electrode additives conventionally used in the art, if desired.

The positive electrode active material may be a lithium-containing oxide, which may be the same or different. As the lithium-containing oxide, a lithium-containing transition metal oxide may be used.

For example, the lithium-containing transition metal oxide may be one or two or more compounds selected from the group consisting of LiₓCoO₂(0.5<x<1.3), LiₓNiO ₂(0.5<x<1.3), LiₓMnO₂(0.5<x<1.3), LiₓMn₂O₄(0.5<x<1.3), Liₓ(NiₐCo_{b}Mn_{c})O₂(0.5<x<1.3, 0<a<1, 0<b<1, 0<c<1, a+b+c=1), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, O≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2), LiₓCoPO₄(0.5<x<1.3), and LiₓFePO₄(0.5<x<1.3). Furthermore, the lithium-containing transition metal oxide may be coated with a metal or metal oxide, such as aluminum (Al). In addition, one or more among sulfide, selenide, and halide may be used in addition to the lithium-containing transition metal oxide.

The positive electrode active material may be included in the positive electrode active material layer in a range of 94.0 to 98.5 wt%. When the positive electrode active material content satisfies the above range, it is advantageous in terms of producing high capacity batteries and imparting sufficient positive electrode conductivity or inter-electrode adhesion.

The current collector used for the positive electrode can be any highly conductive metal, one that the positive electrode active material slurry can readily adhere to, and one that is not reactive in the voltage range of the electrochemical device. Specifically, non-limiting examples of positive electrode current collector include foils made of aluminum, nickel, or combinations thereof. The positive electrode active material layer further includes a conductive material.

The binder polymer may be any binder conventionally used in the art, without limitation. For example, the binder may be a water-insoluble polymer when it is soluble in organic solvents and insoluble in water, or a water-soluble polymer when it is insoluble in organic solvents and soluble in water. Non-water-soluble polymers include polyvinylidene fluoride (PVDF), polyvinylidene chloride (PVDC), polyacrylonitrile (PAN), polypropylene oxide (PPO), and polyethylene oxide-propylene oxide copolymers (PEO-PPO), polytetrafluoroethylene (PTFE), polyimide (PI), polyetherimide (PEI), styrene butadiene rubber (SBR), polyacrylate, and derivatives thereof.

The water-soluble polymer may be one or more selected from the group consisting of various cellulose derivatives, such as carboxymethylcellulose (CMC), methylcellulose (MC), cellulose acetate phthalate (CAP), hydroxypropylmethylcellulose (HPMC), hydroxypropylmethylcellulose phthalate (HPMCP), and the like.

The binder polymer content is proportional to the content of the conductive material contained in the upper positive electrode active material layer and the lower positive electrode active material layer. This is because in order to impart adhesion to the conductive material, which has a relatively very small particle size compared to the active material, more binder polymer is required when the conductive material content increases, and less binder polymer can be used when the conductive material content decreases.

The negative electrode is a structure having a negative electrode active material layer laminated to one or both sides of the negative electrode current collector. In one example, the negative electrode active material layer includes a negative electrode active material, a conductive material, and a binder polymer, and may further include negative electrode additives, if desired, as is customary in the art.

The negative electrode active material can include carbon materials, lithium metal, silicon, or tin. When carbon materials are used as negative electrode active materials, both low-crystalline and high-crystalline carbons can be used. Examples of low-crystalline carbons include soft carbon and hard carbon, while examples of high-crystalline carbons include natural graphite, Kish graphite, and pyrolytic carbon, mesophase pitch based carbon fiber, mesocarbon microbeads, mesophase pitches, and high temperature calcined carbons such as petroleum and coal tarpitch derived cokes.

Non-limiting examples of current collectors used for the negative electrode include foils made of copper, gold, nickel or copper alloys, or combinations thereof. Additionally, the current collector may be a laminated substrate of any of the above materials.

Furthermore, the negative electrode may include conductive materials and binders conventionally used in the art.

The separator can be any porous material used in lithium secondary batteries, for example, it may use polyolefin-based porous membranes or nonwoven fabrics, but it is not limited thereto.

Examples of polyolefin-based porous membranes include membranes formed from polyethylene, such as high-density polyethylene, linear low-density polyethylene, low-density polyethylene, and ultra-high molecular weight polyethylene, and polyolefin-based polymers, such as polypropylene, polybutylene, and polypentene, either alone or a mixture thereof.

In addition to polyolefin-based nonwovens, nonwovens may be made of, for example, polyethyleneterephthalate, polybutyleneterephthalate, polyester, polyacetal, polyamide, polycarbonate, polyimide, polyetheretherketone, polyethersulfone, polyphenyleneoxide, polyphenylenesulfide, polyphenylenesulfide, polyethylenenaphthalene, and nonwoven fabrics formed from polymers such as polyetheretherketone, polyethersulfone, polyphenyleneoxide, polyphenylenesulfide, polyphenylenesulfide, and polyethylenaphthalene, either alone or a mixture thereof.

The polymer, being a porous polymer, may be a polyvinylidene fluoride-based polymer. The polyvinylidene fluoride-based polymer may be polyvinylidene fluoride-cohexafluoropropylene, polyvinylidene fluoride-trichloroethylene, polyvinylidene fluoridecotrichloroethylene, polymethylmethacrylate, polybutylacrylate, polyacrylonitrile, polyvinylpyrrolidone, polyvinyl acetate, polyethylene-co-vinyl acetate, and ethylene vinyl acetate copolymer, polyethylene oxide, polyarylate, cellulose acetate, cellulose acetate butyrate, cellulose acetatepropionate, cellulose acetatepropionate, cyanoethylpullulan, cyanoethylpolyvinylalcohol, cyanoethylcellulose, cyanoethylsucrose, pullulan, or carboxyl methyl cellulose.

Further, an adhesive layer including electrospun polymeric fibers may be formed on one or both sides of the separator. The electrospun polymeric fibers may be one or two or more mixtures selected from the group consisting of polyvinylidene fluoride (PVdF) polymers, styrene-butadienerubber (SBR), polytetrafluoroethylene (PTFE), polyethylene glycol (PEG), polypropylene glycol (PPG), or polypropylene glycol (PPG), toluene diisocyanate (TDI), polymethylmethacrylate, and polyacrylonitrile, polyvinylpyrrolidone, polyvinylacetate, ethylene-co-vinyl acetate, polyethylene oxide, and polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene-butadiene copolymer, and polyimide, and may be a mixture of one or two or more selected from the group consisting of cyanoethylsucrose, pullulan, carboxyl methyl cellulose, acrylonitrile-styrene-butadiene copolymer, and polyimide.

The structure of the nonwoven fabric can be a spunbonded nonwoven fabric or a melt-blown nonwoven fabric composed of long fibers.

The thickness of the porous substrate is not particularly limited, but may be from 5 to 50 µm, and the pore size and porosity present in the porous substrate are also not particularly limited, but may be from 0.01 to 50 µm and 10 to 95%, respectively.

For improving the mechanical strength of the separator composed of the porous substrate and suppressing short circuits between the positive electrode and negative electrode, at least one side of the porous substrate may further include a porous coating layer including inorganic particles and a binder polymer.

The electrolyte may include an organic solvent and an electrolyte salt, wherein the electrolyte salt is a lithium salt. The lithium salt may include, without limitation, those conventionally used in non-aqueous electrolytes for lithium-ion batteries. For example, the lithium salt may include Li⁺ as a cation, and include one or more selected from the group consisting of F⁻, Cl⁻, Br⁻, I⁻, NO³⁻, N(CN)²⁻, BF⁴⁻, ClO⁴⁻, AlO⁴⁻, AlCl⁴⁻, PF⁶⁻, SbF⁶⁻, AsF⁶⁻, BF₂C₂O⁴⁻, BC₄O⁸⁻, (CF₃)₂PF⁴⁻, (CF₃)₃PF³⁻, (CF₃)₄PF²⁻, (CF₃)₅PF⁻, (CF₃)₆P⁻, CF₃SO³⁻, C₄F₉SO³⁻, CF₃CF₂SO³⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO³⁻, CF₃CO²⁻, CH₃CO²⁻, SCN⁻ and (CF₃CF₂SO₂)₂N⁻ as an anion.

The organic solvents included in the aforementioned electrolyte can include, without limitation, those conventionally used in electrolytes for secondary batteries, such as ether, ester, amide, linear carbonate, cyclic carbonate, and the like, each alone or in a mixture of two or more. Representatively, cyclic carbonates, linear carbonates, or a carbonate compound, which is a mixture thereof, may be included.

Specific examples of cyclic carbonate compounds include any one or mixtures of two or more of the following selected from the group consisting of ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, and halogenates thereof. The halogenates include, for example, but are not limited to, fluoroethylene carbonate (FEC).

Specific examples of linear carbonate compounds include, but are not limited to, any one or mixtures of two or more of the following selected from the group consisting of dimethyl carbonate (DMC), diethyl carbonate (DEC), dipropyl carbonate, ethyl methyl carbonate (EMC), methylpropyl carbonate, and ethyl propyl carbonate.

Among the carbonate-based organic solvents, the cyclic carbonates, ethylene carbonate and propylene carbonate, are high viscosity organic solvents with high dielectric constant, which can better dissociate lithium salts in the electrolyte, and when these cyclic carbonates are mixed with low viscosity, low dielectric constant linear carbonates, such as dimethyl carbonate and diethyl carbonate, in appropriate proportions, an electrolyte with higher electrical conductivity can be created.

The ether in the organic solvent may be any one or mixtures of two or more of the following selected from the group consisting of dimethyl ether, diethyl ether, dipropyl ether, methyl ether, methylpropyl ether, and ethylpropyl ether, but is not limited thereto.

The ester in the organic solvent may be any one or mixtures of two or more of the following selected from the group consisting of methyl acetate, ethyl acetate, propyl acetate, methyl propionate, ethyl propionate, propyl propionate, γ-butyrolactone, γ-valerolactone, γ-caprolactone, α-valerolactone, and β-caprolactone, but is not limited thereto.

### [Mode for Carrying out the Invention]

Hereinafter, the present invention will be described in more detail by way of examples. However, it is to be understood that the configurations described in the examples described herein are only one embodiment of the invention and do not represent all of the technical ideas of the present invention, and that there may be various equivalents and modifications that may be substituted for them at the time of filing.

### <Examples>

### Example 1.

A positive electrode active material (LiNi_{0.8}Co_{0.1}Mn_{0.1}O₂, NCM811), a conductive material (carbon black), and a binder (polyvinylidene fluoride, PVdF) were added to N-Methyl-2-Pyrrolidinone (NMP) in a weight ratio of 96:2:2, respectively, and mixed to prepare a positive electrode slurry, and the prepared positive electrode slurry was coated with a capacity of 3.1 mAh/cm² on a 12 µm thick aluminum foil as a positive electrode current collector to prepare a positive electrode.

Artificial graphite, a conductive material (carbon black), and a binder (polyvinylidene fluoride (PVdF)) were added to N-Methyl-2-Pyrrolidinone (NMP) in a weight ratio of 96:2:2, respectively, and then mixed to prepare a negative electrode slurry, and the prepared negative electrode slurry was coated with a capacity of 3.1 mAh/cm² on a 10 µm thick copper foil as a negative electrode current collector to prepare a negative electrode.

Then, a spinning solution containing PVdF-HFP (LBG from Arkema, HFP content 5%) was performed electrospinning at a loading amount of 0.7 g/m² to form a porous web of ultrafine fibers. The porous web was heated and pressurized at 190°C and pressure 20kgf/cm² to prepare a 14 µm thick separator.

Then, a jelly-roll type electrode assembly was prepared by interposing a separator between the positive electrode and the negative electrode. The electrode assembly was inserted into a battery case, electrolyte was injected, and the battery case was sealed to produce a cylindrical secondary battery having a diameter of 21 mm. The electrolyte was prepared by adding LiPF₆ at a concentration of 1.4 M to an organic solvent comprising ethylene carbonate (EC), ethylmethylcarbonate (EMC), and dimethylcarbonate (DMC) in a volume ratio of 20:20:60 (volume ratio). In addition, vinylene carbonate (3 vol%) and succinonitrile (1 vol%) were mixed in the electrolyte.

The lithium secondary battery prepared as described above was disassembled and the negative electrode was punched into 23 mm × 120 mm, and the separator in contact with the negative electrode was punched into 20 mm × 120 mm to prepare a measurement specimen.

### Example 2.

The measurement specimen was prepared in the same way as in Example 1, except that the electrode of the measurement specimen was changed to a negative electrode instead of a positive electrode.

### Examples 3 and 4.

In Examples 3 and 4, measurement specimens were prepared in the same way as in Examples 1 and 2, respectively, except that the thickness of the separator was changed to 13 µm.

### Example 5.

The measurement specimen was prepared in the same way as in Example 2, except that the separator of the lithium secondary battery was changed to a polyethylene separator containing an acrylate-based binder mixture with a thickness of 14 µm.

Specifically, the acrylate-based binder mixture was prepared by adding a fluorinated nonionic surfactant (FC4430 from 3M, 0.001 wt%) to a solvent, water, when the total amount of an inorganic material (Al2O₃, 97 wt%) and an acrylate-based binder (SG-L02 from GL Chem, 3 wt%) was 100 wt%, and then stirring.

### Example 6.

The measurement specimen was prepared in the same way as in Example 5, except that the prepared lithium secondary battery was subjected to an activation process. Specifically, the activation process consisted of an initial charging (SOC, 3%) followed by a degassing including high temperature aging (60°C, 4 hours) and room temperature aging (12 hours). During the room temperature aging, further charging was performed to SOC 65%, followed by full charging to SOC 100% (4.2V) and discharging to SOC 0% (2.5V).

### Examples 7 and 8.

In Examples 7 and 8, measurement specimens were prepared in the same way as in Examples 5 and 6, respectively, except that the thickness of the separator was changed to 13 µm.

### <Comparative Example>

### Comparative Example 1.

Artificial graphite, a conductive material (carbon black), and a binder (polyvinylidene fluoride (PVdF)) were added to N-Methyl-2-Pyrrolidinone (NMP) in a weight ratio of 96:2:2, respectively, and then mixed to prepare a negative electrode slurry, and the prepared negative electrode slurry was coated with a capacity of 3.1 mAh/cm² on a 10 µm thick copper foil as a negative electrode current collector to prepare a negative electrode.

Then, a spinning solution containing PVdF-HFP (LBG from Arkema, HFP content 5%) was electrospun at a loading amount of 0.7 g/m² to form a porous web of ultrafine fibers. The porous web was heated and pressurized at 190°C and pressure 20kgf/cm² to prepare a 14 µm thick separator.

Then, the separator was laminated on the surface of the negative electrode, and a heat press was used to bond the negative electrode and the separator, which was pressed at 90°C and 200kgf for 40 seconds. Afterward, the negative electrode was punched to a size of 23 mm × 120 mm, and the separator in contact with the negative electrode was punched to a size of 20 mm × 120 mm to prepare a measurement specimen.

### Comparative Example 2.

A positive electrode active material (LiNi_{0.8}Co_{0.1}Mn_{0.1}O₂, NCM811), a conductive material (carbon black), and a binder (polyvinylidene fluoride, PVdF) were added to N-Methyl-2-Pyrrolidinone (NMP) in a weight ratio of 96:2:2, respectively, and mixed to prepare a positive electrode slurry, and the prepared positive electrode slurry was coated with a capacity of 3.1 mAh/cm² on a 12 µm thick aluminum foil as a positive electrode current collector to prepare a positive electrode.

Then, a spinning solution containing PVdF-HFP (LBG from Arkema, HFP content 5%) was electrospun at a loading amount of 0.7 g/m² to form a porous web of ultrafine fibers. The porous web was heated and pressurized at 190°C and pressure 20kgf/cm² to prepare a 14 µm thick separator.

Then, the separator was laminated on the surface of the negative electrode, and a heat press was used to bond the negative electrode and the separator, which was pressed at 90°C and 200kgf for 40 seconds. Afterward, the negative electrode was punched to a size of 23 mm × 120 mm, and the separator in contact with the negative electrode was punched to a size of 20 mm × 120 mm to prepare a measurement specimen.

### Comparative Examples 3 and 4.

The measurement specimens were prepared in the same way as in Comparative Examples 1 and 2, except that the thickness of the separator was changed to 13 µm, in Comparative Examples 3 and 4, respectively.

### Comparative Example 5.

The measurement specimen was prepared in the same way as in Comparative Example 1, except that the separator was changed to a polyethylene separator containing an acrylate-based binder mixture with a thickness of 14 micrometers.

Specifically, the acrylate-based binder mixture was prepared by adding a fluorinated nonionic surfactant (FC4430 from 3M, 0.001 wt%) to a solvent, water, when the total amount of an inorganic material (Al₂O₃, 97 wt%) and an acrylate-based binder (SG-L02 from GL Chem, 3 wt%) was 100 wt%, and then stirring.

### Comparative Example 6.

The measurement specimen was prepared in the same way as in Comparative Example 5, except that the thickness of the separator was changed to a 13 µm separator.

### <Experimental Examples>

### 1) Measuring adhesion between electrode and separator in dry or wet conditions

The interfacial adhesion between the electrodes and separator of the measurement specimens in Examples 1 through 4 and Comparative Examples 1 through 4 was measured using a UTM (LLOYD Instrument LF Plus) instrument.

Specifically, Examples 1 through 4 fixed the measurement specimen to a fixing jig immersed with an electrolyte, immersed the measurement specimen in the electrolyte to allow the measurement specimen to be impregnated with the electrolyte for approximately 1 hour, and then measured the interfacial adhesion between the electrode and the separator. In contrast, in Comparative Examples 1 to 4, the measurement specimen was fixed to a fixing jig not immersed in electrolyte, and the interfacial adhesion between the electrode and the separator was measured immediately.

Then, the separator of the measurement specimen of Examples 1 to 4 and Comparative Examples 1 to 4 fixed to the fixing jig was fixed to the grip of the UTM instrument, and the UTM instrument was operated to pull one side of the separator at 100 mm/min to measure the force of separator peeling from the electrode. At this time, the measuring angle of the electrode and the separator was 90°.

In this case, each of Examples 1 to 4 and Comparative Examples 1 to 4 were prepared with three measurement specimens, respectively, and the adhesion of each measurement specimen was measured using the 90° peel-off test described above, and the average value was obtained, and the result is shown in FIG. 7.

Referring to FIG. 7, the average adhesion between the negative electrode and the separator of Comparative Example 1 prepared by the dry adhesion process was about 63 gf/20 mm, while the average adhesion between the negative electrode and the separator of Example 1 prepared by the wet adhesion process was about 0.5 gf/20 mm.

Furthermore, the average adhesion between the positive electrode and the separator of Comparative Example 2 prepared by the dry adhesion process was about 141 gf/20 mm, while the average adhesion between the positive electrode and the separator of Example 2 prepared by the wet adhesion process was about 5 gf/20 mm.

It can be seen that the dry adhesion process without electrolyte wetting improves the adhesion between the negative electrode and the separator, but the wet adhesion process with electrolyte wetting reduces the adhesion between the negative electrode and the separator, and the interfacial adhesion between the positive electrode or negative electrode and the separator immersed in electrolyte, such as inside a real secondary battery, varies considerably from the interfacial adhesion between the positive electrode or negative electrode and the separator manufactured without electrolyte wetting.

This makes it necessary to evaluate the interfacial adhesion between the electrode and the separator in an electrolyte-wetted environment under the same conditions as inside the actual secondary battery, and it has the effect of increasing the reliability of the prediction of the change in the adhesion between the electrode and the separator that occurs inside the actual secondary battery from the results of measuring the interfacial adhesion between the electrode and the separator in the electrolyte-wetted state by simulating the actual secondary battery internal conditions.

Meanwhile, referring to FIG. 7, the average adhesion between the negative electrode and the separator of Comparative Example 3 prepared by the dry adhesion process was about 40 gf/20 mm, while the average adhesion between the negative electrode and the separator of Example 3 prepared by the wet adhesion process was about 3 gf/20 mm.

Furthermore, the average adhesion between the positive electrode and separator of Comparative Example 4 prepared by the dry adhesion process was about 71 gf/20 mm, while the average adhesion between the positive electrode and separator of Example 2 prepared by the wet adhesion process was about 4 gf/20 mm.

Examples 3 and 4 and Comparative Examples 1 and 4 are measurements of adhesion between the negative electrode or positive electrode and the separator under the same conditions as Examples 1 and 2 and Comparative Examples 1 and 2, differing only in the thickness of the separator. It can be seen that Examples 3 and 4 and Comparative Examples 3 and 4 exhibit adhesion behavior similar to that of Examples 1 and 2 and Comparative Examples 1 and 2 above, except that Examples 3 and 4 and Comparative Examples 3 and 4, where the thickness of the separator is relatively thin, are subjected to less gravitational force than Examples 1 and 2 and Comparative Examples 1 and 2, where the thickness of the separator is relatively thick, resulting in a relatively smaller value of the adhesion force between the electrode and the separator. In other words, it can be seen that Comparative Examples 3 and 4, which have undergone a dry adhesion process, show a significant difference in adhesion magnitude when compared to Examples 3 and 4, which have undergone a wet adhesion process, respectively.

As a result, even if the thickness of the separator is different, the results of measuring the adhesion between the electrode and the separator under non-wetted and wetted electrolyte conditions have large deviations, so it is necessary to measure the adhesion between the electrode and the separator under the same electrolyte-wetted conditions as inside the actual secondary battery, which can improve the reliability of predicting whether the folding of the separator occurs inside the actual secondary battery.

### 2) Measuring adhesion between electrode and separator at different process steps

The interfacial adhesion between the electrodes and separator of the measurement specimens in Examples 5 to 8 and Comparative Examples 5 to 6 was measured using a UTM (LLOYD Instrument LF Plus) instrument.

Specifically, in Examples 5 and 7, a measurement specimen obtained by disassembling a lithium secondary battery that had not undergone an activation process was fixed to a receiving portion of a fixing jig immersed with an electrolyte, and the measurement specimen was immersed in the electrolyte for about 1 hour to impregnate the measurement specimen with the electrolyte, and then the interfacial adhesion between the negative electrode and the separator was measured. Meanwhile, in Example 6 and Example 8, the measurement specimen obtained by disassembling the lithium secondary battery that had undergone the activation process was received in a fixing jig containing the electrolyte as in Example 5 and Example 7, immersed in the electrolyte, and the interfacial adhesion between the negative electrode and the separator was measured. On the other hand, in Comparative Examples 5 and 6, the measurement specimen was fixed in the receiving portion of the fixing jig not immersed with electrolyte, and the interfacial adhesion between the negative electrode and the separator was immediately measured.

Then, the separator of the measurement specimen of Examples 5 to 8 and Comparative Examples 5 to 6 fixed to a fixing jig was fixed to the grip of the UTM instrument, and the UTM instrument was operated to pull one side of the separator at 100 mm/min to measure the force of separator peeling from the negative electrode. At this time, the measuring angle of the electrode and the separator was 90°.

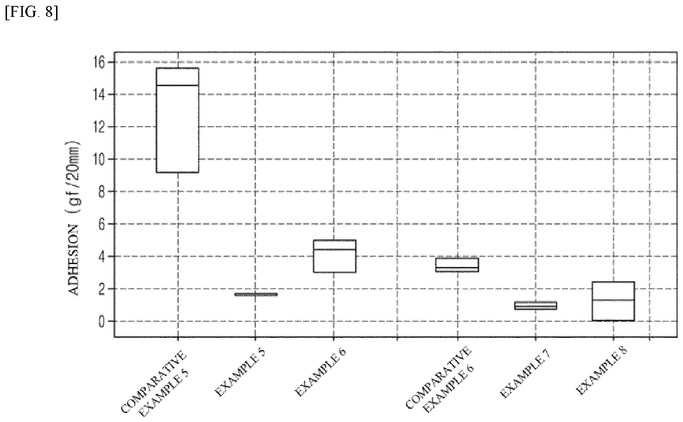

In this case, each of Examples 5 to 8 and Comparative Examples 5 to 6 were prepared with three measurement specimens, respectively, and the adhesion of each measurement specimen was measured using the 90° peel-off test described above, and the average value was obtained, and the result is shown in FIG. 8.

Referring to FIG. 8, the average adhesion between the negative electrode and the separator of Example 5, which was prepared by a dry adhesion process, was about 14.5 gf/20 mm, while the average adhesion between the negative electrode and the separator of Example 6, which was prepared by a wet adhesion process and prepared by disassembling a lithium secondary battery that had not undergone an activation process, was about 1.5 gf/20 mm. Meanwhile, the average adhesion between the negative electrode and the separator of Example 6, which was prepared by a wet adhesion process and prepared by disassembling a lithium secondary battery that had undergone an activation process, was about 4.5 gf/20 mm.

As shown in Example 1 above, the dry adhesion process improves the adhesion between the negative electrode and the separator, but the wet adhesion process, in which the electrolyte is wetted, reduces the adhesion between the negative electrode and the separator, and the interfacial adhesion between the negative electrode and the separator immersed in the electrolyte, such as inside a real secondary battery, is significantly different from the interfacial adhesion between the positive electrode or the negative electrode and the separator prepared without the electrolyte being wetted.

This makes it necessary to evaluate the interfacial adhesion between the negative electrode and the separator under wetting conditions that simulate the same conditions inside a real secondary battery, which can improve the reliability of the prediction of the adhesion between the electrode and the separator that occurs inside a real secondary battery.

On the other hand, by examining the adhesion behavior of Example 5 prepared by disassembling a lithium secondary battery that had not undergone an activation process and Example 6 prepared by disassembling a lithium secondary battery that had undergone an activation process, it can be seen that Example 6 shows higher adhesion than Example 5. This indicates that the interfacial adhesion between the negative electrode and the separator has been improved by various factors during the stepwise charge and discharge process, aging process, and degassing process.

Furthermore, by measuring the adhesion between the electrode and the separator under wet conditions on a measurement specimen made from a lithium secondary battery manufactured under different conditions at each step of the activation process of the secondary battery, and based on the measurement results, it is possible to predict in advance the behavior of the adhesion between the electrode and the separator inside the secondary battery according to the different conditions at each step of the activation process, thereby preventing the folding of the separator at each step of the activation process.

Referring to FIG. 7, the average adhesion between the negative electrode and the separator of Example 6, which was prepared by dry adhesion, was about 3.5 gf/20 mm, while the average adhesion between the negative electrode and the separator of Example 7, which was prepared by wet adhesion and prepared by disassembling a lithium secondary battery that had not undergone an activation process, was about 0.9 gf/20 mm. On the other hand, the average adhesion between the negative electrode and the separator of Example 8, which was prepared by wet adhesion and prepared by disassembling a lithium secondary battery that had undergone an activation process, was about 1.3 gf/20 mm.

Examples 7 to 8 and Comparative Example 6, which measure the adhesion between the negative electrode and the separator differing only in the thickness of the separator from Examples 5 to 7 and Comparative Example 5, show similar behavior to the adhesion force results in Examples 5 to 7 and Comparative Example 5, except that Examples 7 to 8 and Comparative Example 6, which have a relatively greater thickness, have a relatively higher adhesion than Examples 5 to 7 and Comparative Example 6, respectively. That is, Comparative Example 6, which has undergone a dry adhesion process, has a significant difference in the magnitude of the adhesion as opposed to Examples 7 and 8, which have undergone a wet adhesion process. This means that, as previously described in Examples 5 to 6 and Comparative Example 5, the results of measuring the adhesion between the electrode and the separator in a condition without wetting with electrolyte and in a condition with wetting with electrolyte have a large deviation, so it is necessary to measure the adhesion between the electrode and the separator in a condition wetted with electrolyte, which is the same as inside the actual secondary battery, to improve the reliability of predicting whether folding of the separator occurs inside the actual secondary battery.

Furthermore, Example 8 prepared by disassembling a secondary battery that has undergone the activation process shows higher adhesion than Example 7 prepared by disassembling a secondary battery that has not undergone the activation process. It is predicted that the adhesion between the negative electrode and the separator is improved by various factors in the activation process. Meanwhile, when comparing the adhesion behavior to Examples 5 and 6 with different thicknesses of the separator, it can be seen that the thicker the separator, the greater the deviation in adhesion according to whether an activation process has been performed.

The results show that the adhesion between the negative electrode and the separator varies depending on whether the electrolyte is wetted or not, whether it is disassembled from a secondary battery that has undergone the activation process or not, and the thickness of the separator. Therefore, it is possible to measure the adhesion between the negative electrode and the separator by setting not only the electrolyte wetting condition, but also the activation process condition and the separator thickness to be the same as inside the actual secondary battery, and to improve the reliability in the prediction of the adhesion between the negative electrode and the separator inside the actual secondary battery made under various conditions based on the results.

### [Reference numerals]

- 1:: ADHESION MEASURING DEVICE
- 10:: FIXING JIG
- 11:: RECEIVING PORTION
- 12:: FIRST FIXING SILL
- 13:: FIRST GUIDE GROOVE
- 14:: SECOND FIXING SILL
- 15:: SECOND GUIDE GROOVE
- 20:: ADHESION STRENGTH METER
- 21:: GRIP
- 30:: MEASUREMENT SPECIMEN
- 31:: ELECTRODE
- 32:: SEPARATOR
- 40:: COVER
- 41:: HINGE

## Claims

1. An adhesion measuring device comprising:
a fixing jig (10) having a receiving portion (11) for seating a measurement specimen (30) including an electrode (31) and a separator (32), the receiving portion (11) receiving an electrolyte to fix the measurement specimen (30) immersed in the electrolyte; and
an adhesion strength meter (20) provided with a grip (21) for gripping an end region of the separator (32) of the measurement specimen (30), and for measuring an interfacial adhesion between the separator (32) and the electrode (31) by pulling the gripped separator (32) in a direction perpendicular to a surface of the electrode (31),
wherein a portion of the upper surface of the fixing jig (10) is recessed in a downward direction to form the receiving portion (11) for receiving the electrolyte, and
wherein the adhesion strength meter (11) measures the interfacial adhesion between the electrode (11) and the separator (32) in a wet state by immersing the measurement specimen (30) in the electrolyte filled in the receiving portion (11),
**characterized in that**
the receiving portion (11) comprises a pair of second fixing sills (14) protruding inwardly on opposite sides of the fixing jig (10), and a pair of second guide grooves (15) formed between a bottom surface of each of the pair of second fixing sills (14) and a bottom surface of the receiving portion (11),
and
the pair of second fixing sills (14) and the pair of second guide grooves (15) face each other in a width direction of the receiving portion (11), and
wherein the measurement specimen (30) slides into open ends of the pair of second guide grooves (15).

2. The adhesion measuring device of claim 1, wherein the fixing jig (10) has a cover (40) that seals an open portion of the receiving portion (11) to prevent volatilization of the electrolyte in the receiving portion (11).

3. The adhesion measuring device of claim 2, wherein the fixing jig (10) comprises:
a first fixing sill (12) protruding upwardly and bending inwardly from the upper surface of the fixing jig (10); and
a first guide groove (13) formed between a bottom surface of the first fixing sill (12) and the upper surface of the fixing jig (10),
wherein the open portion of the receiving portion (11) is closed or opened by the cover (40) sliding into an open end of the first guide groove (13).

4. The adhesion measuring device of claim 1, wherein a ratio of a length between the pair of second fixing sills (14) to a length in the width direction of a region where the pair of second fixing sills (14) are not formed is in a range of 0.7 to 0.85.

5. The adhesion measuring device of claim 1, a length in the width direction of a region in which the second guide groove (15) is not formed is greater than a length in the width direction between the pair of second guide grooves (15).

6. The adhesion measuring device of claim 2, wherein the open portion of the receiving portion (11) is sealed by rotating the cover (40) that is connected by a hinge (41).

7. The adhesion measuring device of claim 2, wherein the adhesion measurement device further comprises a detector that detects and displays the interfacial adhesion that separates the electrode (31) and the separator (32) of the measurement specimen (30).

8. An adhesion measuring method for measuring the interfacial adhesion between the electrode (31) and the separator (32) in the wet state by using the adhesion measuring device according to claim 1.

9. The adhesion measuring method of claim 8, comprising:
immersing the measurement specimen (30) in the electrolyte by seating the measurement specimen (30) in the fixing jig (10) received with the electrolyte;
fixing the end of the separator (32) of the measurement specimen (30) immersed in the electrolyte to the grip (21) of the adhesion strength meter (20); and
operating the adhesion strength meter (20) to separate the electrode (31) and the separator (32) of the measurement specimen (30) immersed in the electrolyte to measure the interfacial adhesion between the electrode (31) and the separator (32) in the wet state.

10. The adhesion measuring method of claim 9, wherein the electrode (31) of the measurement specimen (30) comprises a positive electrode or a negative electrode which are obtained by disassembling a secondary battery.

11. The adhesion measuring method of claim 10, wherein the electrolyte has a same composition as an electrolyte stored inside the secondary battery.

12. The adhesion measuring method of claim 10, wherein the secondary battery is a secondary battery that has undergone an activation process.

13. The adhesion measuring method of claim 9, wherein immersing the measurement specimen (30)in the electrolyte by seating the measurement specimen (30) in the fixing jig (10) received with the electrolyte comprises attaching a glass substrate to the measurement specimen (30) with a double-sided adhesive tape, and immersing the measurement specimen (30) attached to the glass substrate in the electrolyte.

14. The adhesion measuring method of claim 9, wherein immersing the measurement specimen (30) in the electrolyte by seating the measurement specimen (30) in the fixing jig (10) received with the electrolyte comprises covering the fixing jig (10) with a cover (40) to prevent volatilization of the electrolyte received during a waiting time to allow the electrolyte to impregnate the measurement specimen (30) immersed in the electrolyte.

## Patentansprüche

1. Haftungsmessvorrichtung, umfassend:
eine Fixierlehre (10) mit einem Aufnahmeabschnitt (11) zum Aufnehmen einer Messprobe (30), die eine Elektrode (31) und einen Separator (32) beinhaltet, wobei der Aufnahmeabschnitt (11) einen Elektrolyten aufnimmt, um die in den Elektrolyten eingetauchte Messprobe (30) zu fixieren; und
ein Haftfestigkeitsmessgerät (20), das mit einem Griff (21) zum Greifen eines Endbereichs des Separators (32) der Messprobe (30) und zum Messen einer Grenzflächenhaftung zwischen dem Separator (32) und der Elektrode (31) durch Ziehen des gegriffenen Separators (32) in einer Richtung senkrecht zu einer Oberfläche der Elektrode (31) versehen ist,
wobei ein Abschnitt der Oberseite der Fixierlehre (10) in einer Richtung nach unten ausgespart ist, um den Aufnahmeabschnitt (11) zur Aufnahme des Elektrolyten zu bilden, und
wobei das Haftfestigkeitsmessgerät (11) die Grenzflächenhaftung zwischen der Elektrode (11) und dem Separator (32) in einem nassen Zustand durch Eintauchen der Messprobe (30) in den in den Aufnahmeabschnitt (11) gefüllten Elektrolyten misst,
**dadurch gekennzeichnet, dass**
der Aufnahmeabschnitt (11) ein Paar zweiter Fixierschwellen (14), die auf gegenüberliegenden Seiten der Fixierlehre (10) nach innen vorstehen, und ein Paar zweiter Führungsnuten (15) umfasst, die zwischen einer Unterseite jeder des Paars zweiter Fixierschwellen (14) und einer Unterseite des Aufnahmeabschnitts (11) ausgebildet sind, und
das Paar zweiter Fixierschwellen (14) und das Paar zweiter Führungsnuten (15) einander in einer Breitenrichtung des Aufnahmeabschnitts (11) zugewandt sind, und
wobei die Messprobe (30) in offene Enden des Paars zweiter Führungsnuten (15) gleitet.

2. Haftungsmessvorrichtung nach Anspruch 1, wobei die Fixierlehre (10) eine Abdeckung (40) aufweist, die einen offenen Abschnitt des Aufnahmeabschnitts (11) verschließt, um eine Verflüchtigung des Elektrolyten im Aufnahmeabschnitt (11) zu verhindern.

3. Haftungsmessvorrichtung nach Anspruch 2, wobei die Fixierlehre (10) umfasst:
eine erste Fixierschwelle (12), die nach oben vorsteht und sich von der Oberseite der Fixierlehre (10) nach innen biegt; und
eine erste Führungsnut (13), die zwischen einer Unterseite der ersten Fixierschwelle (12) und der Oberseite der Fixierlehre (10) ausgebildet ist,
wobei der offene Abschnitt des Aufnahmeabschnitts (11) durch die Abdeckung (40), die in ein offenes Ende der ersten Führungsnut (13) gleitet, geschlossen oder geöffnet wird.

4. Haftungsmessvorrichtung nach Anspruch 1, wobei ein Verhältnis einer Länge zwischen dem Paar zweiter Fixierschwellen (14) zu einer Länge in der Breitenrichtung eines Bereichs, in dem das Paar zweiter Fixierschwellen (14) nicht ausgebildet ist, im Bereich von 0,7 bis 0,85 liegt.

5. Haftungsmessvorrichtung nach Anspruch 1, wobei eine Länge in der Breitenrichtung eines Bereichs, in dem die zweite Führungsnut (15) nicht ausgebildet ist, größer ist als eine Länge in der Breitenrichtung zwischen dem Paar zweiter Führungsnuten (15).

6. Haftungsmessvorrichtung nach Anspruch 2, wobei der offene Abschnitt des Aufnahmeabschnitts (11) durch Drehen der Abdeckung (40), die über ein Scharnier (41) verbunden ist, verschlossen wird.

7. Haftungsmessvorrichtung nach Anspruch 2, wobei die Haftungsmessvorrichtung ferner einen Detektor umfasst, der die Grenzflächenhaftung, die die Elektrode (31) und den Separator (32) der Messprobe (30) trennt, erfasst und anzeigt.

8. Haftungsmessverfahren zum Messen der Grenzflächenhaftung zwischen der Elektrode (31) und dem Separator (32) im nassen Zustand unter Verwendung der Haftungsmessvorrichtung nach Anspruch 1.

9. Haftungsmessverfahren nach Anspruch 8, umfassend:
Eintauchen der Messprobe (30) in den Elektrolyten durch Einsetzen der Messprobe (30) in die mit dem Elektrolyten aufgenommene Fixierlehre (10);
Fixieren des Endes des Separators (32) der in den Elektrolyten eingetauchten Messprobe (30) am Griff (21) des Haftfestigkeitsmessgeräts (20); und
Betreiben des Haftfestigkeitsmessgeräts (20), um die Elektrode (31) und den Separator (32) der in den Elektrolyten eingetauchten Messprobe (30) zu trennen, um die Grenzflächenhaftung zwischen der Elektrode (31) und dem Separator (32) im nassen Zustand zu messen.

10. Haftungsmessverfahren nach Anspruch 9, wobei die Elektrode (31) der Messprobe (30) eine positive Elektrode oder eine negative Elektrode umfasst, die durch Demontieren einer Sekundärbatterie erhalten werden.

11. Haftungsmessverfahren nach Anspruch 10, wobei der Elektrolyt die gleiche Zusammensetzung aufweist wie ein im Inneren der Sekundärbatterie gespeicherter Elektrolyt.

12. Haftungsmessverfahren nach Anspruch 10, wobei die Sekundärbatterie eine Sekundärbatterie ist, die einen Aktivierungsprozess durchlaufen hat.

13. Haftungsmessverfahren nach Anspruch 9, wobei das Eintauchen der Messprobe (30) in den Elektrolyten durch Einsetzen der Messprobe (30) in die mit dem Elektrolyten aufgenommene Fixierlehre (10) das Anbringen eines Glassubstrats an der Messprobe (30) mit einem doppelseitigen Klebeband und das Eintauchen der am Glassubstrat angebrachten Messprobe (30) in den Elektrolyten umfasst.

14. Haftungsmessverfahren nach Anspruch 9, wobei das Eintauchen der Messprobe (30) in den Elektrolyten durch Einsetzen der Messprobe (30) in die mit dem Elektrolyten aufgenommene Fixierlehre (10) das Abdecken der Fixierlehre (10) mit einer Abdeckung (40) umfasst, um eine Verflüchtigung des aufgenommenen Elektrolyten während einer Wartezeit zu verhindern, damit der Elektrolyt die in den Elektrolyten eingetauchte Messprobe (30) tränken kann.

## Revendications

1. Dispositif de mesure d'adhérence comprenant :
un gabarit de fixation (10) ayant une portion de réception (11) pour recevoir un échantillon de mesure (30) comportant une électrode (31) et un séparateur (32), la portion de réception (11) recevant un électrolyte pour fixer l'échantillon de mesure (30) immergé dans l'électrolyte ; et
un appareil de mesure de force d'adhérence (20) muni d'une pince (21) pour saisir une région d'extrémité du séparateur (32) de l'échantillon de mesure (30), et pour mesurer une adhérence interfaciale entre le séparateur (32) et l'électrode (31) en tirant le séparateur (32) saisi dans une direction perpendiculaire à une surface de l'électrode (31),
dans lequel une portion de la surface supérieure du gabarit de fixation (10) est évidée vers le bas pour former la portion de réception (11) destinée à recevoir l'électrolyte, et
dans lequel l'appareil de mesure de force d'adhérence (11) mesure l'adhérence interfaciale entre l'électrode (11) et le séparateur (32) à l'état humide en immergeant l'échantillon de mesure (30) dans l'électrolyte rempli dans la portion de réception (11),
**caractérisé en ce que**
la portion de réception (11) comprend une paire de seconds seuils de fixation (14) faisant saillie vers l'intérieur sur des côtés opposés du gabarit de fixation (10), et une paire de secondes rainures de guidage (15) formées entre une surface inférieure de chacun de la paire de seconds seuils de fixation (14) et une surface inférieure de la portion de réception (11), et
la paire de seconds seuils de fixation (14) et la paire de secondes rainures de guidage (15) se font face dans une direction de la largeur de la portion de réception (11), et dans lequel l'échantillon de mesure (30) coulisse dans des extrémités ouvertes de la paire de secondes rainures de guidage (15).

2. Dispositif de mesure d'adhérence selon la revendication 1, dans lequel le gabarit de fixation (10) comporte un couvercle (40) qui scelle une portion ouverte de la portion de réception (11) pour empêcher la volatilisation de l'électrolyte dans la portion de réception (11).

3. Dispositif de mesure d'adhérence selon la revendication 2, dans lequel le gabarit de fixation (10) comprend :
un premier seuil de fixation (12) faisant saillie vers le haut et se courbant vers l'intérieur depuis la surface supérieure du gabarit de fixation (10) ; et
une première rainure de guidage (13) formée entre une surface inférieure du premier seuil de fixation (12) et la surface supérieure du gabarit de fixation (10),
dans lequel la portion ouverte de la portion de réception (11) est fermée ou ouverte par le couvercle (40) coulissant dans une extrémité ouverte de la première rainure de guidage (13).

4. Dispositif de mesure d'adhérence selon la revendication 1, dans lequel un rapport d'une longueur entre la paire de seconds seuils de fixation (14) sur une longueur dans la direction de la largeur d'une région où la paire de seconds seuils de fixation (14) n'est pas formée se situe dans une plage de 0,7 à 0,85.

5. Dispositif de mesure d'adhérence selon la revendication 1, une longueur dans la direction de la largeur d'une région dans laquelle la seconde rainure de guidage (15) n'est pas formée est supérieure à une longueur dans la direction de la largeur entre la paire de secondes rainures de guidage (15).

6. Dispositif de mesure d'adhérence selon la revendication 2, dans lequel la portion ouverte de la portion de réception (11) est scellée par rotation du couvercle (40) qui est relié par une charnière (41).

7. Dispositif de mesure d'adhérence selon la revendication 2, dans lequel le dispositif de mesure d'adhérence comprend en outre un détecteur qui détecte et affiche l'adhérence interfaciale qui sépare l'électrode (31) et le séparateur (32) de l'échantillon de mesure (30).

8. Procédé de mesure d'adhérence pour mesurer l'adhérence interfaciale entre l'électrode (31) et le séparateur (32) à l'état humide au moyen du dispositif de mesure d'adhérence selon la revendication 1.

9. Procédé de mesure d'adhérence selon la revendication 8, comprenant :
l'immersion de l'échantillon de mesure (30) dans l'électrolyte en plaçant l'échantillon de mesure (30) dans le gabarit de fixation (10) recevant l'électrolyte ;
la fixation de l'extrémité du séparateur (32) de l'échantillon de mesure (30) immergé dans l'électrolyte à la pince (21) de l'appareil de mesure de force d'adhérence (20) ; et
l'actionnement de l'appareil de mesure de force d'adhérence (20) pour séparer l'électrode (31) et le séparateur (32) de l'échantillon de mesure (30) immergé dans l'électrolyte afin de mesurer l'adhérence interfaciale entre l'électrode (31) et le séparateur (32) à l'état humide.

10. Procédé de mesure d'adhérence selon la revendication 9, dans lequel l'électrode (31) de l'échantillon de mesure (30) comprend une électrode positive ou une électrode négative qui sont obtenues par désassemblage d'une batterie secondaire.

11. Procédé de mesure d'adhérence selon la revendication 10, dans lequel l'électrolyte a une même composition qu'un électrolyte stocké à l'intérieur de la batterie secondaire.

12. Procédé de mesure d'adhérence selon la revendication 10, dans lequel la batterie rechargeable est une batterie secondaire qui a subi un processus d'activation.

13. Procédé de mesure d'adhérence selon la revendication 9, dans lequel l'immersion de l'échantillon de mesure (30) dans l'électrolyte en plaçant l'échantillon de mesure (30) dans le gabarit de fixation (10) recevant l'électrolyte comprend la fixation d'un substrat en verre à l'échantillon de mesure (30) au moyen d'un ruban adhésif double face, et l'immersion de l'échantillon de mesure (30) fixé au substrat en verre dans l'électrolyte.

14. Procédé de mesure d'adhérence selon la revendication 9, dans lequel l'immersion de l'échantillon de mesure (30) dans l'électrolyte en plaçant l'échantillon de mesure (30) dans le gabarit de fixation (10) recevant l'électrolyte comprend le recouvrement du gabarit de fixation (10) avec un couvercle (40) pour empêcher la volatilisation de l'électrolyte reçu pendant un temps d'attente pour permettre à l'électrolyte d'imprégner l'échantillon de mesure (30) immergé dans l'électrolyte.
